# FASCICULE DE BREVET EUROPEEN

(11) **EP 3 927 589 B1**
(45) Date de publication et mention de la délivrance du brevet: **19.04.2023**
(21) Numéro de dépôt: 20702496.9
(22) Date de dépôt: 06.02.2020
(51) Int. Cl.: B60W 30/188, B60W 30/186

(54) **PROCÉDÉ DE PROTECTION D'UNE CHAÎNE DE TRANSMISSION DE VÉHICULE**
VERFAHREN ZUM SCHUTZ EINES FAHRZEUGANTRIEBSSTRANGS
METHOD FOR PROTECTING A VEHICLE DRIVETRAIN

(30) Priorité: 22.02.2019 FR 1901802
(43) Date de publication de la demande: 29.12.2021
(73) Titulaire: Renault s.a.s, 92100 Boulogne Billancourt (FR)
(72) Inventeur: RIESENMEY, Fabrice, 91780 CHALO SAINT MARS (FR)
(74) Mandataire: Renault Group
(86) Numéro de dépôt international: PCT/EP2020/053011
(87) Numéro de publication internationale: WO 2020/169354

(56) Documents cités:
- EP-A1- 3 219 976
- DE-A1- 19 807 095
- FR-A1- 3 048 217
- GB-A- 2 491 628
- US-A1- 2012 265 427

## Description

### Domaine technique

La présente invention concerne les méthodes de protection des éléments d'une chaîne de transmission, notamment dans un véhicule automobile.

Généralement, une chaîne de transmission de puissance mécanique comprend un embrayage reliant une première chaîne cinématique prévue pour être motrice, par exemple grâce à une source de puissance mécanique telle qu'un moteur thermique, à une deuxième chaîne cinématique qui est prévue pour être consommatrice de puissance mécanique, comprenant par exemple une boîte de vitesses reliée à des roues motrices d'un véhicule automobile.

Cependant, dans certains contextes d'utilisation de la chaîne de transmission, la première chaîne cinématique peut être inapte à assurer son rôle moteur.

Ces contextes d'utilisation peuvent être rencontrés lors d'un contexte d'utilisation exceptionnelle.

Un exemple de contexte d'utilisation exceptionnelle résulte d'une décharge de la batterie électrique du véhicule en dessous de la charge minimale nécessaire au démarrage du moteur.

Le système de démarrage prévu sur le véhicule est alors incapable de mettre en marche le moteur. Le conducteur souhaite généralement réaliser un démarrage dit « à la poussette » en poussant le véhicule dans une pente ou en le tractant à l'aide d'un autre véhicule. On force ainsi le démarrage du moteur à partir de l'énergie cinétique accumulée par le véhicule lors de sa course, en la transmettant des roues vers le moteur, à savoir de la deuxième chaîne cinématique vers la première. Cependant, une telle stratégie expose la chaîne de transmission à de nombreuses erreurs puisqu'on ne maîtrise alors aucun des paramètres de démarrage du véhicule. Notamment, l'opérateur risque d'essayer de passer un rapport de vitesse inadapté, de relâcher l'embrayage trop vite, de fournir trop d'énergie cinétique au véhicule notamment lors de son entraînement dans une pente...

Avec la vitesse du véhicule, des chocs et des impacts sont transmis dans la chaîne de transmission lors de la reprise de couple à la fermeture de l'embrayage. Une stratégie de démarrage inadaptée provoque l'usure et la destruction prématurée des éléments reliés aux chaînes cinématiques et par répercussion de tout élément de la chaîne de transmission du véhicule, notamment de l'embrayage, des suspensions, des arbres de transmissions...

### Techniques antérieures

On connaît des méthodes de protection pour boîtes de vitesses automatiques qui comprennent un embrayage piloté par un dispositif de commande et qui sont équipées d'un dispositif de contrôle de manière à limiter, notamment en en situation exceptionnelle, le couple développé selon un seuil fixé pour préserver la chaîne de transmission.

US 2012/265427 A1 divulgue un procédé comprenant fermer un embrayage pour démarrer le moteur thermique d'un véhicule à partir de l'énergie cinétique accumulée par le véhicule lors de sa course. Avant de fermer l'embrayage, il est prévu de sélectionner un rapport de la boite de vitesse approprié selon la vitesse du véhicule.

Néanmoins, les chaînes de transmission équipées d'un embrayage à commande manuelle, semi-automatique ou robotisée ne sont pas dotées de moyens de contrôle capables d'évaluer une situation d'utilisation et d'y associer une méthode prédictive rapide de protection.

### Exposé de l'invention

Le but de l'invention est donc de pallier les inconvénients liés à un embrayage à commande manuel, semi-automatique ou robotisée, notamment en régulant la vitesse du véhicule pour réduire le couple ou la vitesse de rotation en entrée de l'embrayage lors de contextes d'utilisation exceptionnelle et de manière prédictive pour empêcher la destruction ou l'altération d'éléments de la chaine de transmission, en ajustant la valeur maximale du couple transmis à travers la chaîne au moment de l'embrayage.

Au vu de ce qui précède, l'invention a pour objet un procédé de transmission d'un couple à travers une chaîne de transmission d'un véhicule comprenant un embrayage disposé entre une première chaîne cinématique et une deuxième chaîne cinématique, dans lequel on détermine un contexte d'utilisation de la chaîne de transmission pour un état ouvert de l'embrayage en comparant au moins une première variable d'état de la chaîne de transmission à au moins un seuil de détection, et l'on régule une deuxième variable d'état de la deuxième chaîne cinématique de sorte que la deuxième variable d'état soit inférieure ou égale à une valeur de limitation selon le résultat de la comparaison.

De préférence, la première chaîne cinématique comporte un groupe motopropulseur.

Avantageusement, la première variable d'état comprend le régime du groupe motopropulseur. On détermine le contexte d'utilisation lorsque le régime du moteur est inférieur au seuil de détection comprenant une valeur minimale de régime du moteur.

Selon une forme de réalisation, on régule la deuxième variable d'état par un freinage appliqué à un composant de la deuxième chaîne cinématique.

Selon l'invention, on régule la vitesse de la deuxième chaîne cinématique si elle est susceptible de délivrer à la première chaîne cinématique, un couple dynamique effectif supérieur au seuil de détection comprenant une valeur de couple de détection, la première variable d'état comprenant le couple dynamique effectif par une fermeture de l'embrayage avec une vitesse engagée dans une boîte de vitesse raccordée à la deuxième chaîne cinématique.

Avantageusement, on calcule la valeur du couple dynamique effectif en additionnant la valeur du couple dynamique effectif généré par l'entraînement de la deuxième chaîne cinématique et la valeur de l'inertie de la première chaîne cinématique multipliée par la dérivée en fonction du le temps du couple de friction à l'embrayage, on détermine la valeur de limitation en multipliant une valeur maximale admissible du couple dynamique effectif extraite d'une cartographie en fonction de la vitesse du véhicule mesurée avec un coefficient de sécurité et on calcule la dérivée du couple dynamique effectif en fonction du temps.

La première variable d'état peut comprendre en outre un rapport de vitesse sélectionné, le véhicule pouvant être freiné si un rapport de marche arrière est sélectionné.

De préférence, l'embrayage comporte des moyens de régulation de la fermeture de l'embrayage et la régulation de la deuxième variable d'état est suivie d'une fermeture progressive de l'embrayage.

Avantageusement, la première variable d'état comprend un angle d'inclinaison du véhicule par rapport à un plan horizontal, ledit angle étant comparé à un seuil de détection d'angle d'inclinaison.

L'invention concerne également un procédé dans lequel la première variable d'état comprend un état d'usure associé à l'embrayage par un calcul, lorsque l'embrayage est fermé, de la valeur absolue d'une différence des vitesses de rotation des première et deuxième chaînes cinématiques suivi d'une comparaison de ladite différence à un seuil de glissement pendant une durée prédéterminée.

### Brève description des dessins

L'invention sera mieux comprise à l'étude détaillée de quelques modes de réalisation pris à titre d'exemples non limitatifs et illustrés par les dessins annexés, sur lesquels :
[Fig 1] représente illustre schématiquement un véhicule automobile comprenant une chaîne de transmission de puissance conforme à l'invention ; et
[Fig 2] illustre un exemple de mise en oeuvre du dispositif de transmission d'un couple conforme à l'invention.

### Description détaillée

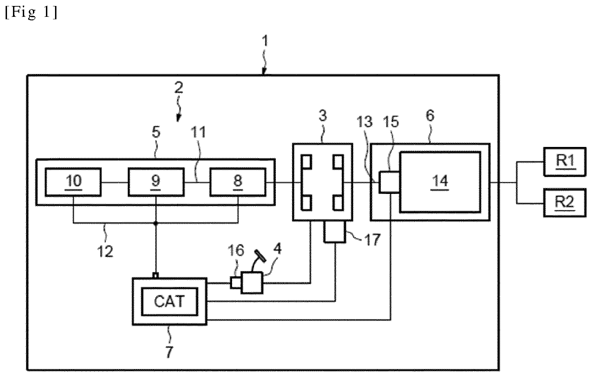

On se réfère à la figure 1 qui illustre un véhicule automobile 1 comprenant une chaîne de transmission de puissance 2 comprenant un embrayage 3.

Dans un premier mode de réalisation, l'embrayage 3 est piloté manuellement par un opérateur par l'intermédiaire d'une interface homme-machine, par exemple une pédale d'embrayage 4.

Dans un deuxième mode de réalisation, l'embrayage 3 est piloté par un système de commande robotisé ou semi-automatique.

La chaîne de transmission de puissance 2 comprend une première chaîne cinématique 5 et une deuxième chaîne cinématique 6 qui peuvent fournir ou consommer de la puissance mécanique et une unité de contrôle électronique 7.

L'unité de contrôle électronique 7 établit la liaison entre des capteurs de mesure physique et des réseaux de communication inter systèmes, par télémétrie ou privatifs. Elle peut comprendre un calculateur 7 réalisé par exemple à partir d'un calculateur automobile comprenant un processeur.

La première chaîne cinématique 5 comprend un moteur 8, par exemple un moteur thermique 8, des éléments de transmission 9 et des équipements accessoires 10 reliés à un premier arbre de transmission 11.

Les équipements accessoires moteurs 10 peuvent comprendre un compresseur de climatisation et un alternateur. Les éléments de transmission 9 et les équipements accessoires 10 peuvent être commutés de manière à être entraînés par le premier arbre de transmission 11.

Les éléments de transmission 9 comprennent un vilebrequin et prévoient notamment divers éléments de transmission cinématique à ratios de démultiplication, tel que des courroies ou engrenages. Ils transmettent par le premier arbre de transmission 11 un couple en provenance du moteur 8 lorsqu'il est en marche, ou, en provenance des roues R1, R2 lorsqu'il est éteint.

Bien entendu, la première chaîne cinématique 5 peut comprendre un ou plusieurs éléments servant d'éléments de transmission 9.

Le calculateur 7 commande le moteur 8 par l'intermédiaire du bus 12.

Les éléments montés sur le premier arbre de transmission 11 comprennent les éléments de transmission 9, les accessoires moteurs 10, et le moteur 8. Les moments d'inertie de ces éléments, par rapport au premier arbre de transmission 11 sont stockés dans le calculateur 7 de sorte que le calculateur 7 détermine le moment d'inertie de la première chaîne cinématique 5 selon l'état de commutation des éléments de transmission 9 pour déterminer le couple dynamique effectif égal à la somme du couple dynamique effectif et de la valeur de l'inertie de la première chaîne cinématique multipliée par la dérivée du régime du moteur 8 selon le temps.

Le bus de communication 12 est relié à d'autres organes du véhicule 1 de sorte que la vitesse du véhicule 1 et l'état de la boîte de vitesses 14, portant sur l'engagement d'une vitesse dans la boîte, soient connus du calculateur 7.

Le bus de communication 12 est par exemple un bus CAN.

La deuxième chaîne cinématique 6 de puissance mécanique comprend un dispositif consommateur de puissance mécanique monté sur le deuxième arbre de transmission 13.

Ce dispositif consommateur de puissance mécanique comprend une boîte de vitesses 14 entraînant des roues R1, R2 du véhicule 1.

Dans le premier mode de réalisation, la boîte de vitesses 14 est manuelle.

Dans le second mode de réalisation, la boîte de vitesses 14 est robotisée ou semi-automatique.

Un capteur de vitesse de rotation 15 est monté sur le deuxième arbre de transmission 13 pour mesurer et transmettre la vitesse de rotation dudit arbre au calculateur 7.

Le premier arbre de transmission 11 de la première chaîne cinématique 5 est relié à une entrée de l'embrayage 3 et le deuxième arbre de transmission 13 de la deuxième chaîne cinématique 6 est relié à une sortie de l'embrayage 3 de sorte que lorsque l'embrayage est en position fermée, la puissance mécanique générée par le moteur 8 est transmise à la boîte de vitesses 14.

Un capteur de position 16 de la pédale d'embrayage 4 communique au calculateur 7 la position de la pédale 4.

Si la valeur de la position relevée par le capteur 16 est supérieure à un seuil de fermeture, le calculateur 7 considère que l'embrayage 3 est ouvert. Dans le cas contraire, l'embrayage 3 est considéré comme fermé.

Le seuil de fermeture est déterminé de manière empirique selon le type d'embrayage 3.

Dans un contexte d'utilisation, le moteur 8 peut être éteint et le véhicule en mouvement. Les roues R1, R2 transmettent alors depuis la deuxième chaîne cinématique 6 une énergie cinétique et un couple inertiel lié au régime de rotation de la première chaîne cinématique 5 et de la composante des inerties de chaque élément de l'arbre de transmission 11, provisionnant un couple, qui deviendra effectif à la fermeture de l'embrayage 3. A la fermeture de l'embrayage 3 un couple d'impact se propage en cumulant le couple provisionné par une rotation des roues R1, R2 et le couple inertiel.

L'énergie cinétique acquise par le véhicule 1 est transformée en un couple d'impact particulièrement important par le biais de la deuxième chaîne cinématique 6 lors d'une fermeture non maîtrisée de l'embrayage 3 si la vitesse du véhicule 1 est élevée et si l'embrayage est manuel car un manque de progressivité de l'accouplement via l'embrayage 3 transfère l'énergie en un temps très court. Si la vitesse du véhicule 1 est trop élevée une fermeture rapide risque par exemple de provoquer la torsion ou la rupture des éléments des chaînes cinématiques, des supports du groupe motopropulseur, des biellettes de reprise de couple ou du système mécanique de distribution (courroie, tendeur, chaine...).

A l'inverse, plus le temps de collage (ou crabotage) de l'embrayage 3 est long et plus le couple inertiel est faible. Le couple transféré est donc déterminé selon les limites admissibles de la chaine de transmission 2.

Dans le premier mode de réalisation, dans le cas d'une boîte manuelle 14, la fermeture de l'embrayage 3 est contrôlée manuellement. En contexte exceptionnel, le conducteur peut accidentellement lâcher la pédale 4 de commande d'embrayage. Il y a alors une fermeture en environ cent millisecondes de la chaine de transmission et le provisionnement du couple par les roues R1, R2 de la deuxième vers la première chaîne cinématique génère un couple d'impact susceptible de provoquer des dégâts si la vitesse du véhicule 1 est trop importante, ainsi qu'un freinage brusque et incontrôlé du véhicule qui peut mettre en danger l'opérateur.

Dans le deuxième mode de réalisation, dans le cas d'une boîte de vitesse 14 semi-automatique ou robotisée, la fermeture de l'embrayage 3 qui est contrôlée, par exemple par le calculateur 7, ne dépend pas du conducteur ce qui permet d'en assurer une progressivité.

La chaîne de transmission de puissance 2 comprend en outre au moins un capteur d'usure 17 mesurant un paramètre d'usure d'un élément de la chaîne de transmission 2 qui est susceptible de devenir l'élément le plus fragile de la chaîne en se fragilisant à l'usure. Par exemple, le capteur d'usure 17 mesure la température du revêtement de friction des disques de friction de l'embrayage 3. Le capteur d'usure 17 comprend dans ce cas une sonde de température au sein du revêtement de friction fonctionnant par télémétrie.

Les éléments de la chaîne cinématique et les composants moteurs possèdent un couple réellement admissible au-delà duquel au moins l'un d'entre eux, l'élément le plus fragile, se détériore pour un couple d'impact.

La valeur maximale de couple transmissible est soit connue intrinsèquement selon la configuration des éléments de la chaîne de transmission 2, soit déterminée régulièrement par le calculateur 7 lorsque l'embrayage 3 est ouvert et selon l'état d'usure d'éléments de la chaîne de transmission 2.

Le calculateur 7 comprend une cartographie « Couple Impact Composants » CAT qui documente le couple d'impact accidentel maximal admissible par la chaîne de transmission 2. La cartographie associe une valeur maximale de couple transmissible à la chaîne de transmission 2 par la fermeture de l'embrayage 3 à une vitesse donnée, et est apte à modifier la cartographie CAT.

Le moteur 8 et les éléments de transmission 9 communiquent avec le calculateur 7 par l'intermédiaire d'un bus de communication 12 de sorte que le couple dynamique effectif généré par le moteur 8, le régime du moteur 8 et le couple d'impact maximal admissible soient connus du calculateur 7.

Le calculateur 7, le capteur de vitesse 15, le capteur de position 16 et le capteur d'usure 17 sont incorporés dans un dispositif de transmission de couple à travers une chaîne de transmission de puissance de sorte que le calculateur 7 détermine un type de contexte d'utilisation de la chaîne de transmission de puissance 2 selon l'état du véhicule 1 et en comparant au moins une première variable d'état de la chaîne de transmission 2, notamment de la première chaîne cinématique 5, à au moins un seuil de détection, le calculateur 7 régule une deuxième variable d'état de la deuxième chaîne cinématique 6 de sorte que la deuxième variable d'état soit inférieure ou égale à une valeur prédéterminée dépendante de la vitesse du véhicule 1.

Le ou les seuils de détection sont enregistrés dans le calculateur 7.

Le véhicule 1 est soit en état normal soit en état de contexte d'utilisation exceptionnelle. Selon que le véhicule 1 soit considéré ou non en contexte d'utilisation exceptionnelle, la valeur prédéterminée est extraite de la cartographie CAT ou est une valeur fixe sauvegardée par le calculateur 7.

Il peut s'agir de tout dispositif apte à communiquer avec le moteur 8, les éléments de transmission 9 et accessoires moteurs 10, le capteur de vitesse 15, le capteur de position 16 et le capteur d'usure 17.

De plus, le dispositif est apte à sauvegarder et calculer des inerties, calculer le couple dynamique effectif, apte à sauvegarder et modifier une cartographie CAT pour déterminer un type de contexte d'utilisation exceptionnelle de la chaîne de transmission de puissance selon l'état de l'embrayage 3 en comparant au moins une première variable d'état de la chaîne de transmission 2, par exemple de la première chaîne cinématique 5, à au moins un seuil de détection.

En outre, ledit dispositif est apte à réguler une deuxième variable d'état de la première chaîne cinématique 3 de sorte que la deuxième variable d'état de la deuxième chaîne cinématique 3 soit inférieure ou égale à une valeur prédéterminée dépendante de la nature et éventuellement de l'usure des éléments mécaniques contraints composant la chaîne de transmission 2. La nature et le comportement en usure des éléments mécaniques contraints lors de la fermeture de la chaîne de transmission 2 sont connus à la conception du véhicule 1. Par exemple, pour chaque élément, le couple d'impact accidentel maximal admissible est connu selon l'expérience de l'homme de l'art et selon des modèles de conception numérique.

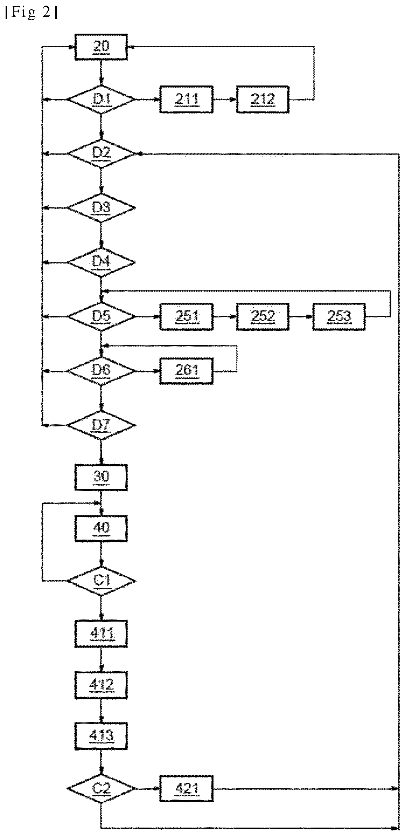

La Figure 2 illustre un exemple de mise en oeuvre du dispositif de transmission d'un couple.

Cette mise en oeuvre peut commencer par une étape 20 dans laquelle le véhicule 1 est considéré se trouver dans un contexte d'utilisation qui peut être considéré comme habituel. Le dispositif de transmission adopte alors une stratégie d'utilisation dite normale, dans laquelle le véhicule 1 peut être garé ou en mouvement et allumé ou éteint. Si l'embrayage est ouvert, la deuxième chaîne cinématique 6 ne reçoit pas de puissance mécanique depuis le moteur 8. Le couple dynamique fourni en entrée de l'embrayage est égal à la somme du couple fourni par le moteur 8 et du couple inertiel des éléments 8, 9, 10, 11 reliés à la première chaîne cinématique.

Le dispositif de transmission de couple peut être configuré pour détecter, à travers des étapes D1 à D7, un contexte d'utilisation de la chaîne de transmission de puissance 2 qui peut être considéré comme exceptionnel du type « démarrage à la poussette ».

L'étape 30 consiste à calculer des variables d'état permettant de vérifier que le couple transitant par le deuxième arbre de transmission 13 n'est pas supérieur au couple admissible par les éléments de la chaîne de transmission 2.

L'étape 40 permet de comparer les paramètres calculés en étape 30 à des seuils de protection prédéfinis.

Les étapes 411, 412, 413, 421 consistent à appliquer des stratégies de protection de la chaîne de transmission 2.

La première variable d'état comprend le couple dynamique effectif et la deuxième variable d'état comprend la vitesse du véhicule 1.

Lors des étapes D1 à D7 par lesquelles le dispositif réalise une détection d'un contexte d'utilisation exceptionnelle de la chaîne de transmission de puissance 2, le calculateur 7 peut être configuré pour déterminer, par exemple lors de la première étape D1, si tous les capteurs 15, 16, 17 équipant le véhicule 1 qui vont être sollicités sont fonctionnels. Le cas échéant, l'étape D1 mène à l'étape D2.

En cas de défaillance détectée (étape D1) d'un des capteurs sollicités 15, 16, 17, un mode dégradé est déclaré lors de l'étape 211.

Le mode dégradé de l'étape 211 mène à l'émission d'une information, telle que l'affichage d'un signal d'erreur sur un tableau de bord du véhicule 1 (étape 212).

L'étape 212 renvoie à l'étape 20. Le mode dégradé entraîne donc une sortie de stratégie. Si un capteur est défaillant, l'opérateur n'est pas assisté quel que soit le contexte d'utilisation de la chaîne de transmission 2.

La première étape de détection D1 est répétée à intervalle de temps régulier, par exemple toutes les dix millisecondes.

L'étape D2 consiste à vérifier que le moteur 8 est arrêté ou sous un seuil de régime de rotation. Le cas échéant, l'étape D2 se poursuit par l'étape D3, sinon elle renvoie à l'étape 20.

L'étape D3 consiste à contrôler au moyen d'un capteur 17 la valeur d'une variable d'état constituée par l'inclinaison du véhicule 1. Par exemple, un accéléromètre 17 mesure et compare l'inclinaison du véhicule 1 par rapport à un angle de seuil pris par rapport à un plan horizontal.

Dans un mode de réalisation, l'angle de seuil peut être défini à sensiblement zéro degré d'angle, si l'on souhaite que la stratégie soit mise en place même sans inclinaison du véhicule 1, par exemple si le véhicule 1 en panne est tracté par un autre véhicule 1 sur un terrain plat.

Avantageusement, l'angle seuil peut être défini à sensiblement cinq degrés. Si le véhicule 1 est incliné au-delà de l'angle de seuil, on considère qu'il est suffisamment en pente et la stratégie se poursuit vers l'étape D4, sinon elle retourne à l'étape 20.

L'étape D4 peut consister à vérifier l'orientation du véhicule 1 par rapport au sens de la pente au moyen d'un capteur à accéléromètre 17, de. Si l'avant du véhicule 1 est orienté vers la descente, l'étape D4 se poursuit par l'étape D5, sinon elle renvoie à l'étape 20.

L'étape D5 consiste à déterminer un rapport de vitesse éventuellement engagé et si l'embrayage 3 est ouvert ou fermé. Si l'opérateur a sélectionné un rapport de vitesse de marche avant, par exemple la troisième vitesse de la boîte de vitesse 14, et ouvre l'embrayage 3, l'étape D5 se poursuit par l'étape D6.

En revanche, si l'embrayage 3 est fermé, par exemple par un relâchement de pédale d'embrayage 4, l'étape D5 retourne à l'étape 20.

Si, en outre, un rapport de vitesse correspondant à une marche arrière est sélectionné dans la boîte de vitesse 14, l'étape D5 se poursuit par l'étape 251.

L'étape 251 consiste en l'émission d'un message d'alerte, par exemple sur un afficheur d'un tableau de bord du véhicule 1, indiquant au conducteur qu'il a sélectionné ou enclenché un rapport de marche arrière.

L'étape 251 se poursuit par une étape 252 consistant à élaborer une consigne de ralentissement du véhicule 1, par exemple sensiblement autour de cinq kilomètres par heure.

Lors de l'étape 253, la consigne de l'étape 252 est appliquée pour ralentir le véhicule 1. Cette consigne peut par exemple s'appliquer par un freinage constant des roues R1, R2 qui limite la vitesse du véhicule 1 à sensiblement cinq kilomètres par heure. On diminue ainsi le risque d'une prise de vitesse dangereuse du véhicule 1 vers l'arrière lors d'un démarrage avec un rapport de marche arrière enclenché.

L'étape D6 consiste à vérifier que les dispositifs de freinage équipant le véhicule 1 sont inactifs, par exemple par le relâchement du frein à main et du frein à pédale. On détermine ainsi que le véhicule 1 n'est pas simplement garé mais que l'opérateur s'apprête à mettre le véhicule 1 en mouvement, puisqu'il en déverrouille tout système de stationnement. En outre, il peut être détecté par le capteur d'embrayage 16 que l'opérateur appuie sur la pédale d'embrayage 4 et ouvre ainsi l'embrayage 3. Le cas échéant, l'étape D6 se poursuit par l'étape D7, sinon elle renvoie à l'étape 20.

L'étape D7 consiste à vérifier que le véhicule 1 est en mouvement. Par exemple, un capteur de vitesse 15 comprenant un accéléromètre et localisé sur la deuxième chaîne cinématique 6 est configuré pour déterminer une vitesse non nulle du véhicule 1. Ainsi, on peut détecter lors de l'étape D7 que l'opérateur met en place une stratégie de démarrage « à la poussette » et que le véhicule 1 s'apprête à prendre de la vitesse dans une pente vers l'avant. Le cas échéant, le contexte d'utilisation déterminé à l'étape D7 se poursuit par l'étape 30. Sinon elle renvoie à l'étape 20.

Les étapes D1 à D7 sont effectuées successivement à intervalle régulier, par exemple toutes les dix millisecondes.

Lors de l'étape 30, l'embrayage 3 étant à l'état ouvert, le véhicule étant en mouvement et une vitesse étant engagée dans la boîte de vitesses 14 et la chaîne de transmission 2 étant dans un contexte d'utilisation déterminé par les étapes D1 à D7, le calculateur 7 détermine la vitesse de rotation de la deuxième chaîne cinématique 6 pour déterminer si une fermeture de l'embrayage 3 délivrerait un couple dynamique effectif supérieur au seuil de détection comprenant une valeur de couple de détection.

On calcule la valeur du couple dynamique effectif en additionnant la valeur du couple dynamique effectif généré par l'entraînement de la deuxième chaîne cinématique 6 et la valeur de l'inertie de la première chaîne cinématique 5 multipliée par la dérivée en fonction du temps du couple de friction à l'embrayage.

On détermine la valeur de limitation en multipliant la valeur maximale admissible du couple dynamique effectif par un coefficient de sécurité et on calcule la dérivée du couple dynamique effectif en fonction du temps.

Lors de l'étape 40, la dérivée du couple dynamique effectif en fonction du temps, calculé en temps réel lors de l'étape 30, est comparée à une valeur seuil.

Le calculateur 7 reporte les données de calcul de l'étape 30 à une cartographie CAT préétablie spécifiquement pour la chaîne de transmission 2 et comportant la valeur maximale admissible à l'embrayage du couple dynamique effectif ou de sa dérivée par rapport au temps en fonction de la vitesse du véhicule 1 mesurée.

Ainsi, le calculateur 7 détermine la vitesse du véhicule 1, calcule la valeur du couple dynamique effectif et se réfère à la cartographie CAT en reportant la valeur du couple dynamique effectif en fonction de la vitesse du véhicule mesurée en temps réel.

Le calculateur 7 détermine la valeur de limitation égale à la valeur du couple dynamique effectif multipliée par un coefficient de sécurité compris entre zéro et cent pourcents, par exemple quatre-vingts pourcents, et calcule la dérivée du couple dynamique effectif selon le temps. Avantageusement, ce coefficient de sécurité peut être ajusté en temps réel. Par exemple, il peut prendre en compte la masse du véhicule 1 calculée en temps réel.

Lors de l'étape C1, la dérivée du couple dynamique effectif ajustée par le coefficient de sécurité est comparée à une valeur seuil. On détermine ainsi une vitesse du véhicule 1 à laquelle l'opérateur peut fermer en sécurité l'embrayage 3, même en relâchant la pédale d'embrayage 4 le plus brusquement possible. On se place donc dans le cas le plus défavorable de mauvaise utilisation.

L'étude de la dérivée du couple dynamique effectif par rapport au temps permet de confirmer en temps réel la tendance à une prise de vitesse dangereuse du véhicule 1 vers un couple d'impact à l'embrayage potentiellement destructeur.

Si la dérivée du couple dynamique effectif est supérieure à un seuil de détection comprenant un seuil de dérivée du couple dynamique effectif, on poursuit à l'étape 411. Sinon on revient à l'étape 40.

Le seuil de dérivée du couple dynamique effectif admissible est calibré lors de la mise au point de la chaîne de transmission 2 de sorte que lorsque la dérivée du couple dynamique effectif est supérieure audit seuil, le couple transitant dans la chaîne de transmission 2 peut à très court terme endommager les composants mécaniques couplés à la chaîne de transmission 2.

La valeur maximale du couple transmissible est déterminée lors de la conception et la mise au point de l'embrayage 3, et dépend notamment de la vitesse et de la masse du véhicule 1.

Tant qu'il n'y a pas de dépassement de la valeur dudit seuil par la dérivée du couple dynamique effectif, l'étape C1 renvoie à l'étape 40, sinon l'étape C1 se poursuit par l'étape 411.

Lors de l'étape 411, une stratégie de protection est mise en place. Une consigne de régulation de vitesse adaptée à la situation est déterminée. L'étape 411 mène à l'étape 412.

Durant l'étape 412, on applique la consigne de régulation de vitesse déterminée lors de l'étape 411.

Le calculateur 7 régule le couple dynamique effectif de sorte qu'il soit inférieur ou égal à la valeur de limitation en pilotant la vitesse d'un élément de la deuxième chaîne cinématique, par exemple des roues R1, R2.

Par exemple, on applique un freinage piloté sur les quatre roues R1, R2 du véhicule 1 si la vitesse de celui-ci est trop élevée ou une absence de freinage si la vitesse du véhicule 1 peut être accrue d'après les résultats de l'étape 40. Le seuil de désactivation du freinage est déterminé lors de la mise au point de la chaîne de transmission 2. On peut en outre s'assurer de ne pas bloquer complètement les roues lors de ce freinage pour éviter une perte de contrôle du véhicule 1.

La vitesse du véhicule 1 est ainsi régulée sensiblement autour de la vitesse calculée lors de l'étape 30. L'étape 412 mène à l'étape 413.

Lors de l'étape 413, l'opérateur peut tenter de démarrer le moteur 8 par une fermeture de l'embrayage 3. Un message peut être envoyé au passager, par exemple sur le tableau de bord pour lui indiquer de relâcher la pédale d'embrayage 4. L'étape 413 mène à l'étape C2.

Lors de l'étape C2, si la boîte de vitesse 14 est à commande manuelle, l'étape C2 renvoie directement à l'étape D2 par laquelle on regarde si le moteur 8 a démarré et le cas échéant on retourne à l'étape 20.

Si en revanche la boîte de vitesse 14 est à commande semi-assistée ou robotisée, l'étape C2 mène d'abord à l'étape 421 qui renvoie à l'étape D2. Lors de l'étape 421, la pédale d'embrayage 4 est relâchée par l'opérateur et l'embrayage est progressivement fermé par les dispositifs de régulation prévus par ce type de boîte de vitesse 14. Lors de la fermeture de l'embrayage 3, les algorithmes de commande de l'embrayage 3 doivent notamment être capables de synchroniser l'arbre 11 du moteur 8 à l'arbre primaire 13 de la deuxième chaîne cinématique 6 sans choc ou sans glissement prolongé.

La cartographie CAT peut être mise à jour selon l'état d'usure de la chaîne de transmission 2. Elle permet d'extrapoler l'évolution de l'usure de l'embrayage 3 pour ajuster la valeur de couple transmis et minimiser sous un seuil de désactivation le couple d'impact. Par exemple, dès que le couple dynamique effectif est inférieur à la valeur de limitation, un compteur interne au calculateur 7 est déclenché pendant une durée prédéterminée très courte, par exemple de trente millisecondes, de sorte que, pendant la durée prédéterminée, si à chaque actualisation des mesures, le couple dynamique effectif est supérieur ou égal à une valeur de limitation, le compteur est incrémenté. Si à l'issue de la durée prédéterminée, la valeur du compteur est inférieure à un seuil de désactivation, la régulation s'arrête et on retourne à l'étape 20.

Lorsque pour une usure donnée, qui correspond au nombre d'utilisations au compteur, la valeur de couple transmissible est inférieure à une valeur de couple minimale, l'opérateur est averti que la maintenance de l'embrayage 3 est nécessaire.

Ainsi, le dispositif de transmission de couple évalue en temps réel le couple en entrée de l'embrayage 3 et adopte une stratégie de protection de la chaîne de transmission 2 selon la capacité de l'embrayage 3 et selon la vitesse du véhicule 1.

Aucun moyen physique supplémentaire n'est nécessaire pour l'implantation du dispositif de transmission de couple.

Les données nécessaires à la mise en oeuvre du dispositif de transmission de couple sont mises à disposition sur le bus de données et par les capteurs 15, 16, 17 équipant le véhicule 1.

Le dispositif de transmission évalue et confirme un contexte d'utilisation exceptionnelle et gère le couple en entrée de l'embrayage 3 de manière prédictive de sorte que la chaîne de transmission 2, notamment l'embrayage 3, ne se détériore pas prématurément.

Il permet ainsi de garantir la tenue mécanique des chaînes cinématiques 5, 6 malgré des sollicitations accidentelles ou mal adaptées.

## Revendications

1. Procédé de transmission d'un couple à travers une chaîne de transmission (2) d'un véhicule (1) comprenant un embrayage (3) disposé entre une première chaîne cinématique (5) et une deuxième chaîne cinématique (6), dans lequel on détermine un contexte d'utilisation de la chaîne de transmission (2) pour un état ouvert de l'embrayage (3) en comparant au moins une première variable d'état de la chaîne de transmission (2) à au moins un seuil de détection, et l'on régule une deuxième variable d'état de la deuxième chaîne cinématique (6) de sorte que la deuxième variable d'état soit inférieure ou égale à une valeur de limitation selon le résultat de la comparaison, **caractérisé en ce qu'**on régule la vitesse animant la deuxième chaîne cinématique (6) si elle est susceptible de délivrer à la première chaîne cinématique (5) un couple dynamique effectif supérieur au seuil de détection comprenant une valeur de couple de détection, la première variable d'état comprenant le couple dynamique effectif par fermeture de l'embrayage (3) avec une vitesse engagée dans une boîte de vitesse (14) raccordée à la deuxième chaîne cinématique (6).

2. Procédé selon la revendication 1, dans lequel la première chaîne cinématique (5) comporte un groupe motopropulseur (8).

3. Procédé selon la revendication 2, dans lequel la première variable d'état comprend le régime du groupe motopropulseur (8) et dans lequel on détermine le contexte d'utilisation lorsque le régime du moteur (8) est inférieur au seuil de détection comprenant une valeur minimale de régime du moteur (8).

4. Procédé selon la revendication 1, 2 ou 3, caractérisé 'une quelconque des revendications précédentes, dans lequel on régule la deuxième variable d'état par un freinage appliqué à un composant de la deuxième chaîne cinématique (6).

5. Procédé selon l'une quelconque des revendications précédentes, dans lequel on calcule la valeur du couple dynamique effectif en additionnant la valeur du couple dynamique effectif généré par l'entraînement de la deuxième chaîne cinématique (6) et la valeur de l'inertie de la première chaîne cinématique (5) multipliée par la dérivée selon le temps du couple de friction à l'embrayage, on détermine la valeur de limitation en multipliant une valeur maximale admissible du couple dynamique effectif extraite d'une cartographie (CAT) en fonction de la vitesse du véhicule (1) mesurée par un coefficient de sécurité et on calcule la dérivée du couple dynamique effectif selon le temps.

6. Procédé selon l'une quelconque des revendications précédentes, dans lequel la première variable d'état comprend un rapport de vitesse sélectionné et dans lequel on freine le véhicule si un rapport de marche arrière est sélectionné.

7. Procédé selon l'une quelconque des revendications précédentes, dans lequel l'embrayage (3) comporte des moyens de régulation de la fermeture de l'embrayage (3) et la régulation de la deuxième variable d'état est suivie d'une fermeture progressive de l'embrayage (3).

8. Procédé selon l'une quelconque des revendications précédentes, dans lequel la première variable d'état comprend un angle d'inclinaison du véhicule (1) par rapport à un plan horizontal et dans lequel on compare ledit angle à un seuil de détection d'angle d'inclinaison.

9. Procédé selon l'une quelconque des revendications précédentes, dans lequel la première variable d'état comprend un état d'usure associé à l'embrayage (3) par un calcul, lorsque l'embrayage (3) est fermé, de la valeur absolue d'une différence des vitesses de rotation des première et deuxième chaînes cinématiques (5, 6) suivi d'une comparaison de ladite différence à un seuil de glissement pendant une durée prédéterminée.

## Patentansprüche

1. Verfahren zur Übertragung eines Drehmoments über einen Antriebsstrang (2) eines Fahrzeugs (1), der eine Kupplung (3) beinhaltet, die zwischen einem ersten Kinematikstrang (5) und einem zweiten Kinematikstrang (6) angeordnet ist, wobei ein Nutzungskontext des Antriebsstrangs (2) für einen offenen Zustand der Kupplung (3) bestimmt wird, indem mindestens eine erste Zustandsvariable des Antriebsstrangs (2) mit mindestens einem Detektionsschwellenwert verglichen wird, und eine zweite Zustandsvariable des zweiten Kinematikstrangs (6) so geregelt wird, dass gemäß dem Ergebnis des Vergleichs die zweite Zustandsvariable kleiner als oder gleich einem Grenzwert ist, **dadurch gekennzeichnet, dass** die Geschwindigkeit, die den zweiten Kinematikstrang (6) antreibt, geregelt wird, wenn diese dem ersten Kinematikstrang (5) ein effektives dynamisches Drehmoment bereitstellen könnte, das größer als der Detektionsschwellenwert, der einen Detektionsdrehmomentwert beinhaltet, ist, wobei die erste Zustandsvariable das effektive dynamische Drehmoment durch das Schließen der Kupplung (3) bei eingelegtem Gang in einem Getriebe (14), das mit dem zweiten Kinematikstrang (6) verbunden ist, beinhaltet.

2. Verfahren nach Anspruch 1, wobei der erste Kinematikstrang (5) eine Motorantriebsgruppe (8) umfasst.

3. Verfahren nach Anspruch 2, wobei die erste Zustandsvariable die Drehzahl der Motorantriebsgruppe (8) beinhaltet und wobei der Nutzungskontext bestimmt wird, wenn die Drehzahl des Motors (8) kleiner ist als der Detektionsschwellenwert, der einen Mindestdrehzahlwert des Motors (8) beinhaltet.

4. Verfahren nach Anspruch 1, 2 oder 3, gekennzeichnet ein beliebiger der vorhergehenden Ansprüche, wobei die zweite Zustandsvariable durch ein Bremsen geregelt wird, das auf eine Komponente des zweiten Kinematikstrangs (6) angewendet wird.

5. Verfahren nach einem beliebigen der vorhergehenden Ansprüche, wobei der Wert des effektiven dynamischen Drehmoments berechnet wird, indem man den Wert des effektiven dynamischen Drehmoments, das durch den Antrieb des zweiten Kinematikstrangs (6) erzeugt wird, und den Wert der Trägheit des ersten Kinematikstrangs (5), der mit der zeitlichen Ableitung des Reibdrehmoments an der Kuppelung multipliziert wird, addiert, der Grenzwert bestimmt wird, indem man einen maximal zulässigen Wert des effektiven dynamischen Drehmoments, der einer Kartographie (CAT) in Abhängigkeit von der gemessenen Geschwindigkeit des Fahrzeugs (1) entnommen wird, mit einem Sicherheitskoeffizienten multipliziert, und die Ableitung des effektiven dynamischen Drehmoments nach der Zeit berechnet wird.

6. Verfahren nach einem beliebigen der vorhergehenden Ansprüche, wobei die erste Zustandsvariable einen ausgewählten Gang beinhaltet und wobei das Fahrzeug abgebremst wird, wenn ein Rückwärtsgang ausgewählt ist.

7. Verfahren nach einem beliebigen der vorhergehenden Ansprüche, wobei die Kupplung (3) Mittel zur Regelung des Schließens der Kupplung (3) umfasst und auf die Regelung der zweiten Zustandsvariable ein allmähliches Schließen der Bremse (3) folgt.

8. Verfahren nach einem beliebigen der vorhergehenden Ansprüche, wobei die erste Zustandsvariable einen Neigungswinkel des Fahrzeugs (1) in Bezug auf eine horizontale Ebene beinhaltet und wobei der Winkel mit einem Detektionsschwellenwert für einen Neigungswinkel verglichen wird.

9. Verfahren nach einem beliebigen der vorhergehenden Ansprüche, wobei die erste Zustandsvariable einen Verschleißzustand, der mit der Kupplung (3) assoziiert ist, beinhaltet, durch eine Berechnung, bei geschlossener Kupplung (3), des Absolutwerts einer Differenz zwischen Drehgeschwindigkeiten des ersten und des zweiten Kinematikstrangs (5, 6), gefolgt von einem Vergleich der Differenz mit einem Schlupfschwellenwert über einen vorgegebenen Zeitraum.

## Claims

1. Method for transmitting a torque through a drivetrain (2) of a vehicle (1) comprising a clutch (3) arranged between a first transmission sequence (5) and a second transmission sequence (6), wherein a context of use of the drivetrain (2) for an open state of the clutch (3) is determined by comparing at least a first state variable of the drivetrain (2) with at least one detection threshold, and a second state variable of the second transmission sequence (6) is regulated in such a way that the second state variable is less than or equal to a limit value according to the result of the comparison, **characterized in that** the speed driving the second transmission sequence (6) is regulated if it is liable to deliver to the first transmission sequence (5) an effective dynamic torque that is above the detection threshold comprising a detection torque value, the first state variable comprising the effective dynamic torque through closing the clutch (3) with a gear engaged in a gearbox (14) connected to the second transmission sequence (6).

2. Method according to Claim 1, wherein the first transmission sequence (5) comprises a propulsion unit (8) .

3. Method according to Claim 2, wherein the first state variable comprises the speed of the propulsion unit (8), and wherein the context of use is determined when the speed of the engine (8) is below the detection threshold comprising a minimum value for the speed of the engine (8) .

4. Method according to Claim 1, 2 or 3, characterized any one of the preceding claims, wherein the second state variable is regulated by braking applied to a component of the second transmission sequence (6).

5. Method according to any one of the preceding claims, wherein the value of the effective dynamic torque is calculated by summing the value of the effective dynamic torque generated by the driving of the second transmission sequence (6) and the value of the inertia of the first transmission sequence (5) multiplied by the derivative, with respect to time, of the friction torque at the clutch, the limit value is determined by multiplying a maximum permissible value for the effective dynamic torque, as extracted from a map (CAT) as a function of the measured speed of the vehicle (1), by a factor of safety, and the derivative, with respect to time, of the effective dynamic torque is calculated.

6. Method according to any one of the preceding claims, wherein the first state variable comprises a selected gear ratio and wherein the vehicle is braked if a reverse gear ratio is selected.

7. Method according to any one of the preceding claims, wherein the clutch (3) comprises means for regulating the closing of the clutch (3) and the regulating of the second state variable is followed by a progressive closing of the clutch (3).

8. Method according to any one of the preceding claims, wherein the first state variable comprises an angle of inclination of the vehicle (1) with respect to a horizontal plane, and wherein said angle is compared with an angle-of-inclination detection threshold.

9. Method according to any one of the preceding claims, wherein the first state variable comprises a state of wear associated with the clutch (3) by calculating, when the clutch (3) is closed, the absolute value of a difference in rotational speeds of the first and second transmission sequences (5, 6) followed by a comparison of said difference against a threshold for slip over a predetermined length of time.
